# EUROPÄISCHE PATENTANMELDUNG

(11) **EP 1 147 881 A2**
(43) Veröffentlichungstag der Anmeldung: **24.10.2001**
(21) Anmeldenummer: 01109288.9
(22) Anmeldetag: 17.04.2001
(51) Int. Cl.: B31D 1/02, B32B 31/12

(54) **Verfahren zur Herstellung eines selbstklebenden Etikettes**

(30) Priorität: 20.04.2000 AT 7052000
(71) Anmelder: PACHEM Papier - Chem. Produktions Gesellschaft m.b.H. & Co. KG, 6845 Hohenems (AT)
(72) Erfinder: Summer, Thomas, 6833 Klaus (AT)
(74) Vertreter: Hefel, Herbert, Dipl.-Ing.

(57) **Zusammenfassung**

Bei einem Verfahren zur Herstellung eines selbstklebenden Etiketts mit einem an seiner Vorderseite sichtbaren Aufdruck und mit einer Klebstoffschicht an seiner Rückseite, die von einer Trägerfolie (13) abgedeckt ist, wird das Etikett in einem durchgängigen Fertigungsprozeß hergestellt, in welchem zunächst eine Folie (1), die eine Basislage des Etiketts bildet, bedruckt wird und in dessen weiterer Folge eine Trägerfolie (3) an der Rückseite des Etiketts angebracht wird, wobei zuvor auf der der Trägerfolie (3) zugewandten Rückseite der Folie (1) oder auf der der Folie (1) zugewandten Vorderseite der Trägerfolie (3) eine Klebstoffschicht aufgebracht wird, welche von einem Haftkleber zum Aufkleben des Etiketts gebildet wird. Das die Klebstoffschicht ausbildende Material wird mittels einer Breitschlitzdüse (4) auf die Rückseite der Folie (1) oder auf die Vorderseite der Trägerfolie (3) aufgebracht und zur Konditionierung der Klebstoffschicht wird in der Folge eine UV-Bestrahlung durchgeführt wird (Fig.).

## Beschreibung

Die Erfindung betrifft ein Verfahren zur Herstellung eines selbstklebenden Etiketts mit einem an seiner Vorderseite sichtbaren Aufdruck und mit einer Klebstoffschicht an seiner Rückseite, die von einer Trägerfolie abgedeckt ist, bei dem das Etikett in einem durchgängigen Fertigungsprozeß hergestellt wird, in welchem zunächst eine Folie, die eine Basislage des Etiketts bildet, bedruckt wird und in dessen weiterer Folge eine Trägerfolie an der Rückseite des Etiketts angebracht wird, wobei zuvor auf der der Trägerfolie zugewandten Rückseite der Folie oder auf der der Folie zugewandten Vorderseite der Trägerfolie eine Klebstoffschicht aufgebracht wird, welche von einem Haftkleber zum Aufkleben des Etiketts gebildet wird.

Herkömmlicherweise werden bedruckte, selbstklebende Etiketten in mehreren voneinander unabhängigen Fertigungsprozessen hergestellt. In einem ersten Fertigungsprozeß wird auf eine zu einer Rollenware konfektionierte Folie, welche eine Basislage des Etiketts bildet, eine Klebstoffschicht aufgebracht und diese Klebstoffschicht von einer silikonisierten Trägerfolie abgedeckt. Dieser Folienverbund wird in der Folge wiederum zu Rollenware konfektioniert. In einem weiteren Fertigungsprozeß wird dieser Folienverbund zur Bedruckung der Folie der erforderlichen Anzahl von Druckstationen zugeführt und anschließend die Umfangskontur des Etiketts in einer Stanzeinrichtung ausgestanzt, wobei der zwischen den einzelnen Etiketten auf der Trägerfolie verbleibende Abfall von der Trägerfolie abgezogen wird.

Bekannt ist weiters aus der EP 0 736 371 A1 eine Verfahren der eingangs genannten Art, bei welchem die vollständige Etikettenproduktion in einem einzigen Maschinendurchlauf erfolgt. Es wird hierbei zunächst eine Folie, die eine Basislage des Etiketts bildet, bedruckt und in der weiteren Folge eine Trägerfolie an der Rückseite des Etiketts angebracht. Zuvor wird eine Klebstoffschicht entweder auf der der Trägerfolie zugewandten Rückseite der Folie oder auf der der Folie zu gewandten Vorderseite der Trägerfolie aufgebracht.

Aufgabe der Erfindung ist es, ein verbessertes Verfahren der eingangs genannten Art bereitzustellen, durch welches Vorteile bei der Herstellung des Etiketts bzw. beim fertiggestellten Etikett erzielt werden können. Erfindungsgemäß gelingt dies dadurch, daß das die Klebstoffschicht ausbildende Material mittels einer Breitschlitzdüse auf die Rückseite der Folie oder auf die Vorderseite der Trägerfolie aufgebracht wird und daß zur Konditionierung der Klebstoffschicht in der Folge eine UV-Bestrahlung durchgeführt wird.

Bei herkömmlicherweise eingesetzten Heißschmelzklebern (die zum Aufbringen in ihre flüssige Form erhitzt werden) müssen diese relativ hoch erhitzt werden, so daß es zu einer Beeinträchtigung der Folie des Etiketts kommen kann. Eine erfindungsgemäß mittels einer Breitschlitzdüse aufgebrachte und UV-vernetzte Klebstoffschicht ermöglicht dagegen eine nur geringere Temperaturbelastung der Folie, so daß Folienverzüge vermieden werden können. Eine erfindungsgemäße Klebstoffschicht neigt außerdem nur zu einem sehr geringen Maß zum sogenannten "Fädenziehen" beim Stanzprozeß während der Herstellung des Etiketts ebenso wie beim Spendvorgang des Etiketts bei dessen Anwendung, wodurch diese Vorgänge besser durchführbar sind.

Weiters ist es beim erfindungsgemäßen Etikett möglich, durch eine Variation der Intensität der UV-Bestrahlung unterschiedliche Stärken der Klebekraft des Etiketts durch eine unterschiedliche derartige Konditionierung einzustellen.

Weiters hat ein mit dem erfindungsgemäßen Verfahren hergestelltes Etikett den Vorteil, daß eine Temperaturbeständigkeit seiner Klebstoffschicht bis 150° C gewährleistet ist, bei herkömmlichen Heißschmelzklebern liegt diese Grenze bei 80° C.

Unter "Folie" werden in dieser Schrift sowohl dünne bahnförmige Papier- als auch Kunststoffmaterialien bezeichnet, obwohl die Verwendung einer Kunststoffolie bevorzugt ist.

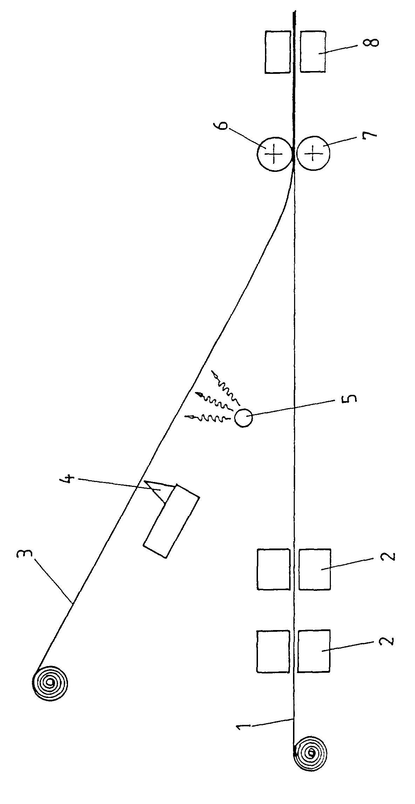

Weitere Vorteile und Einzelheiten der Erfindung werden im folgenden anhand der beiliegenden Zeichnung erläutert. Darin zeigt die einzige Figur eine schematische Darstellung eines Ausführungsbeispiels eines erfindungsgemäßen Fertigungsprozesses.

Die zu Rollenware konfektionierte Folie 1, welche eine Basislage des herzustellenden Etiketts bildet, wird zunächst einer gewünschten Anzahl von Druckstationen 2 zugeführt, in denen sie mit einem Aufdruck versehen wird. Besteht die Folie 1 aus einem undurchsichtigen Material, so erfolgt dieser Aufdruck an der Vorderseite der Folie 1 (in der Figur unten liegend). Besteht die Folie 1 aus einem transparenten Material, so kann auch in einem sogenannten Konterdruckverfahren ein spiegelverkehrter Aufdruck auf die Rückseite dieser Folie 1 aufgebracht werden, welcher beim fertiggestellten Etikett an dessen Vorderseite durch die Folie 1 hindurch sichtbar ist.

Eine ebenfalls zu Rollenware konfektionierte Trägerfolie 3 ist an ihrer Vorderseite (welche beim fertiggestellten Etikett der Folie 1 zugewandt ist) silikonisiert. An dieser Vorderseite der Trägerfolie 3 wird mittels einer sich über die Breite der Trägerfolie 3 erstreckende Breitschlitzdüse 4 eine Klebstoffschicht aufgebracht. Bei dem dazu vorzugsweise verwendeten Klebstoff handelt es sich um einen unter UV-Einstrahlung polymerisierenden Acrylat-Kleber. Der Kleber liegt in Granulatform als Monomer vor, wird durch Erhitzen verflüssigt und über die Breitschlitzdüse 4 als Schicht auf die Trägerfolie 3 aufgetragen. In der anschließenden UV-Bestrahlungseinrichtung 5 polymerisiert der Klebstoff und erhält durch diese Konditionierung seine gewünschten Haftklebeeigenschaften. Die Haftung der Klebstoffschicht auf der silikonisierten Trägerfolie ist allerdings nur gering, weshalb durch das Zusammenführen der Trägerfolie 3 mit der Folie 1 und das Zusammendrücken dieser Folien mittels der Druckrollen 6, 7 eine Übertragung dieser Klebstoffschicht auf die Rückseite der Folie 1 stattfindet. Bei einem späteren Abziehen der Trägerfolie 3 bleibt die Klebstoffschicht daher auf der Folie 1 haften und bildet die Haftklebstoffschicht an der Rückseite des selbstklebenden Etiketts.

In der Stanzeinrichtung 8 wird schließlich die Stanzung der Etiketten durchgeführt, wobei das zwischen den Etiketten auf der Trägerfolie 3 verbleibende Restmaterial von dieser Trägerfolie 3 abgezogen wird.

Gegebenenfalls kann vor dem Stanzvorgang auf der Vorderseite der Folie 1 eine durchsichtige, den Aufdruck abdeckende Folie aufkaschiert werden. Statt dessen kann auch eine Lackschicht aufgetragen werden.

Falls die Folie 1 aus einem durchsichtigen Material besteht und der Aufdruck auf die Rückseite dieser Folie erfolgt ist, kann vor der Kontaktierung der Rückseite dieser Folie mit der Klebstoffschicht eine Sperrschicht über den auf der Rückseite der Folie 1 angebrachten Aufdruck aufgebracht werden, welche eine ungünstige Wechselwirkung zwischen dem Aufdruck und der Klebstoffschicht verhindert. Diese Sperrschicht kann von einem Lack gebildet werden. Geeignete Lacke sind beispielsweise die sogenannten "Primer", welche üblicherweise vor der Aufbringung einer Druckfarbe auf ein Substrat aufgebracht werden, um die Haftung der Druckfarbe auf dem Substrat zu verbessern.

Anstelle der Aufbringung der Klebstoffschicht auf die Trägerfolie 3 und anschließende Übertragung auf die Rückseite der Folie 1 könnte auch vorgesehen sein, die Klebstoffschicht direkt auf die Rückseite der Folie 1 wiederum mittels einer sich über die Breite der Folienbahn erstreckenden Breitschlitzdüse aufzubringen (evtl. wiederum unter vorheriger Zwischenschaltung einer Sperrschicht).

Denkbar und möglich ist es weiters auch, die Silikonisierung der Trägerfolie 3 ebenfalls während des beschriebenen durchgängigen Fertigungsprozesses durchzuführen.

### Legende

### zu den Hinweisziffern:

- 1: Folie
- 2: Druckstation
- 3: Trägerfolie
- 4: Breitschlitzdüse
- 5: UV-Bestrahlungseinrichtung
- 6: Druckrolle
- 7: Druckrolle
- 8: Stanzeinrichtung

## Patentansprüche

1. Verfahren zur Herstellung eines selbstklebenden Etiketts mit einem an seiner Vorderseite sichtbaren Aufdruck und mit einer Klebstoffschicht an seiner Rückseite, die von einer Trägerfolie (13) abgedeckt ist, bei dem das Etikett in einem durchgängigen Fertigungsprozeß hergestellt wird, in welchem zunächst eine Folie (1), die eine Basislage des Etiketts bildet, bedruckt wird und in dessen weiterer Folge eine Trägerfolie (3) an der Rückseite des Etiketts angebracht wird, wobei zuvor auf der der Trägerfolie (3) zugewandten Rückseite der Folie (1) oder auf der der Folie (1) zugewandten Vorderseite der Trägerfolie (3) eine Klebstoffschicht aufgebracht wird, welche von einem Haftkleber zum Aufkleben des Etiketts gebildet wird, **dadurch gekennzeichnet, daß** das die Klebstoffschicht ausbildende Material mittels einer Breitschlitzdüse (4) auf die Rückseite der Folie (1) oder auf die Vorderseite der Trägerfolie (3) aufgebracht wird und daß zur Konditionierung der Klebstoffschicht in der Folge eine UV-Bestrahlung durchgeführt wird.

2. Verfahren nach Anspruch 1, **dadurch gekennzeichnet, daß** zur Ausbildung der Klebstoffschicht zunächst ein durch Erhitzen verflüssigtes Monomer über die Breitschlitzdüse (4) aufgetragen wird, das mittels der UV-Bestrahlung polymerisiert wird.

3. Verfahren nach Anspruch 2, **dadurch gekennzeichnet, daß** das Monomer ein Monomer eines unter UV-Einstrahlung polymerisierenden Acrylat-Klebers ist.

4. Verfahren nach einem der Ansprüche 1 bis 3, **dadurch gekennzeichnet, daß** an der Vorderseite der Folie (1) eine transparente Folie aufkaschiert wird oder ein Lack aufgetragen wird.

5. Verfahren nach einem der Ansprüche 1 bis 4, **dadurch gekennzeichnet, daß** die Folie (1) transparent ist und auf ihrer Rückseite spiegelverkehrt in einem Konterdruckverfahren bedruckt wird.

6. Verfahren nach Anspruch 5, **dadurch gekennzeichnet, daß** auf die bedruckte Rückseite der Folie (1) eine Sperrschicht, vorzugsweise in Form eines Lakkes, zur Verhinderung von Wechselwirkungen zwischen der Druckfarbe des Aufdrucks und der Klebstoffschicht aufgebracht wird.

7. Verfahren nach einem der Ansprüche 1 bis 6, **dadurch gekennzeichnet, daß** in diesem durchgängigen Fertigungsprozeß die Trägerfolie (3) vor ihrer Kontaktierung mit dem Klebstoff silikonisiert wird.

8. Verfahren nach einem der Ansprüche 1 bis 7, **dadurch gekennzeichnet, daß** die Aufbringung des die Klebstoffschicht ausbildenden Materials mittels der Breitschlitzdüse (4) in einer Druckmaschine erfolgt.

9. Verfahren nach einem der Ansprüche 1 bis 8, **dadurch gekennzeichnet, daß** sich die Breitschlitzdüse über die gesamte Breite der zu beschichtenden Folienbahn erstreckt.

10. Verfahren nach einem der Ansprüche 1 bis 9, **dadurch gekennzeichnet, daß** die Folie (1) eine Kunststoffolie ist.
